# EUROPEAN PATENT APPLICATION

(11) **EP 0 702 165 A2**
(43) Date of publication of application: **20.03.1996**
(21) Application number: 95111508.8
(22) Date of filing: 21.07.1995
(51) Int. Cl.: F16F 7/09, D06F 37/20

(54) **Shock absorber, in particular for clothes washing machines**

(30) Priority: 16.09.1994 IT PN940054
(71) Applicant: GRUSAN di SANDRIN Giannino & C. s.a.s., I-33080 Porcia, Pordenone (IT)
(72) Inventor: Sandrin, Giannino, I-33080 Porcia, Pordenone (IT)
(74) Representative: Giugni, Valter

(57) **Abstract**

Shock absorber, in particular for clothes washing machines, comprising a sleeve (11) in which there is slidably arranged a piston (12) provided with at least a first friction ring (18).

At least a second friction ring (23) is slidably mounted on the rod (16) of the piston (12) in an intermediate position between the first friction ring (18) and a shoulder (20) formed on the rod (16).

The shock absorber according to the present invention is capable of providing progressively variable dampening effects responsive to the different stresses or loads imposed to the washing tub assembly of the washing machine.

## Description

The present invention refers to a new improved-type shock absorber, in particular such a shock absorber fit for use in household clothes washing machines.

It is a widely known fact that, in clothes washing machines, the washing tub assembly, which comprises mainly the tub, in which the washing liquor is admitted, and the rotating drum, which is provided to hold the washload, shall be sustained by elastic elements in view of dampening the vibrations that are generated during the operation of the machine. Such elastic elements usually consist of springs and shock absorbers.

Prior-art shock absorbers are generally formed by a cylindrical sleeve, which is pivotally hinged on to the base of the washing machine and in which a piston is slidably inserted, the rod of said piston being pivotally hinged on to the washing tub of the washing machine. The piston has its outer surface provided with at least a friction ring which is adapted to co-operate with the inner surface of the cylindrical sleeve so as to create the sliding friction required to dampen the oscillations of the washing tub assembly.

Shock absorbers of this type have undergone a number of improvements and design variations. Two recent examples are for instance described in the patent specifications EP 0 217 234 and EP 0 315 076.

Prior art shock absorbers are generally capable of performing their duty in a quite satisfactory manner. However, they are quite complicated in their construction and expensive. Furthermore, they generate a continuous, constant dampening effect, since friction rings are rigidly attached to the piston sliding inside the sleeve.

It would on the contrary be advantageous, and it is actually a purpose of the present invention, to provide a shock absorber that is capable of ensuring a variable dampening effect in a self-adjusting manner responsive to the different conditions in which stresses and unbalance loads are imposed to the washing tub assembly.

According to the present invention such a type of shock absorber is provided by using a plurality of friction rings that are adapted to slide along the piston rod, according to the characteristics as recited in the appended claims.

Purposes, advantages and characteristics of the present invention will anyway become more apparent from the description that is given below by way of non-limiting example with reference to the accompanying drawings in which:
- Figure 1 is a longitudinal-section view of a shock absorber according to the present invention in a first operational position thereof;
- Figure 2 is a longitudinal-section view of a shock absorber according to the present invention in a second operational position thereof;
- Figures 3 and 4 are longitudinal-section views of a second embodiment of the shock absorber according to the present invention in two different operational positions thereof, respectively.

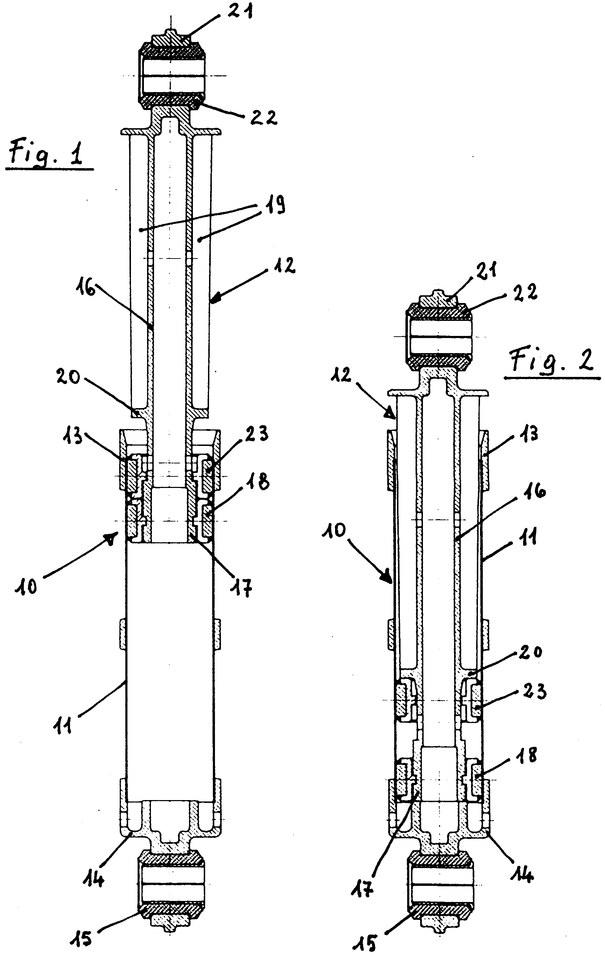

With particular reference to Figures 1 and 2, the shock absorber 10 can be seen to substantially consist of a cylindrical sleeve 11, which is preferably made of a metal material securely fitted within a cage-like structure of synthetic material, and a piston 12, which is made of synthetic material and is slidably mounted inside said sleeve 11.

The sleeve 11 is usually made from a suitably machined metal tube; in the case of the shock absorber 10 according to the present invention, it is advantageously suggested that such a sleeve be rather formed from a sheet-metal blank that is first cut to length and then rolled up so as to obtain the required cylindrical configuration, the edges of the sheet-metal blank being arranged to fit together along a generatrix of the cylinder. Such a solution proves to be much more convenient and cost-effective to manufacture, since it allows processing under less stringent tolerance requirements.

The holding cage of the sleeve 11 defines an end portion 13, which is open and flared in order to facilitate the insertion of the piston 12 therethrough, and an opposite end portion 14, in which a bush 15 is inserted transversally with respect to the axis of the shock absorber.

The bush 15 is adapted to receive a pin (not shown), which is fixed to the base of the washing machine and on which the sleeve 11 is capable of oscillating when the washing tub assembly of the machine undergoes stresses and unbalance loads generated by the operation of the same washing machine.

The piston 12 is formed by a hollow cylindrical rod 16 on which, at the end portion 17 fitting into the sleeve 11, a friction ring 18, which can for instance be made of a polyurethane-based elastomer, is attached. The rod 16 is provided with outer longitudinal ribs 19 extending along a substantial distance over its total length, which act as a guiding element for the piston 12 sliding within the sleeve 11. The ribs 19 terminate, on the side facing the head 17 of the piston, with an annular shoulder 20, the function of which will be described further on.

At its external end portion with respect to the sleeve 11, the piston 12 terminates with a head 21 in which a bush 22 is inserted transversally with respect to the axis of the shock absorber, said bush 22 being adapted to receive a pin (not shown) which is attached to the washing tub assembly of the machine and on which the piston 12 can oscillate during the operation of the washing machine.

According to the present invention, on the rod 16 of the piston 12, between the head 17 and the annular shoulder 20, there is mounted a further friction ring 23, equally made of a polyurethane-based elastomer, which is capable of sliding freely on the same rod 16.

In the illustration of Figure 1, the shock absorber 10 is shown in its condition of maximum extension, corresponding to a resting, no-load condition or a condition in which a minimum oscillatory load is imposed thereupon by the washing tub assembly of the clothes washing machine. The head 17 of the piston 12 is displaced towards the end portion 13 of the sleeve 11 and is in contact with the friction ring 23, which in the Figure appears to be pulled upwards by the sliding movement of the same head 17.

When the washing machine starts to operate oscillatory and downward compression loads are generated and imposed on to the washing tub assembly, so that the need arises for said loads and stresses to be dampened by the action of the shock absorber. Therefore, the shock absorber will oscillate on the pins that are associated to the bushes 15 and 22, while the piston is compressed downwards into the sleeve 11.

According to the present invention, the rod 16 of the piston 12 will initially move further into the sleeve 11, thereby generating a dampening or braking friction between the friction ring 18 of the head 17 and the inner wall of the sleeve 11. Then, as the unbalance load increases, the piston 12 will keep sliding further into the sleeve 11 until the annular shoulder 20 is brought into contact against the second friction ring 23, thereby causing also this second friction ring 23 to start developing its dampening or braking action. A progressively variable dampening action responsive to the actual unbalance loads imposed on the washing tub assembly is in this way achieved in the desired manner.

In the illustration appearing in Figure 2, the shock absorber is shown in a condition of considerable load imposed thereupon. In the extreme (ie. a condition that should actually never be reached), the friction ring 23 may come into contact with the head 17 when it descends to reach the lower end portion 14.

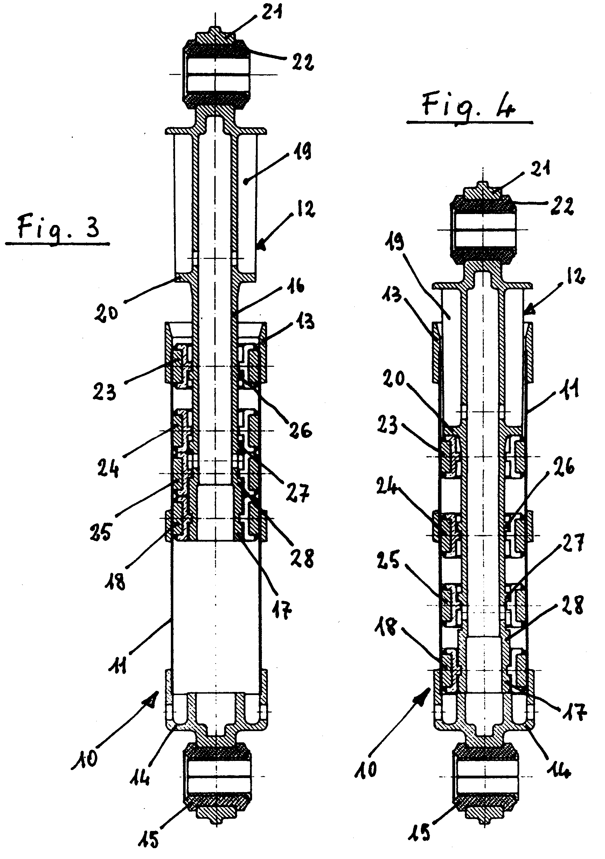

Figures 3 and 4 illustrate a second embodiment of a shock absorber according to the present invention, wherein details that are common to both embodiments, ie. the first embodiment shown in Figures 1 and 2 and the second one shown in Figures 3 and 4, are given the same reference numerals.

This second embodiment of the shock absorber according to the present invention differs from the first one for the fact that three friction rings 23, 24 and 25 are in this case mounted in a freely slidable manner on the rod 16 of the piston 12, wherein the friction rings 24 and 25 are mounted between the friction ring 18 of the head 17 of the piston and the friction ring 23, the latter friction rings being already used in the first afore described embodiment.

Furthermore, annular projections 26, 27 and 28 are appropriately formed on the outer surface of the rod 16 of the piston 12, said annular projections being arranged to co-operate with the friction rings 24 and 25 in view of causing them to slide when the shock absorber 10 is progressively loaded, while keeping the friction ring 18 duly spaced apart from the friction rings 23-25. And it is exactly in view of enabling a progressively variable dampening effect to take place, owing to the sequential manner in which the friction rings 18 and 23-25 are actuated, that the respective distances from the shoulder 20 to the annular projections 26, 27 and 28 are different. In particular, said distances are progressively increasing from the shoulder 20 to the annular projection 28.

The shock absorber according to the invention is therefore technically innovative and advantageous as compared with prior-art shock absorbers, since it enables dampening effects to be achieved which are really variable in a progressive manner according to the different unbalance or oscillatory loads imposed thereupon by the washing tub assembly of the washing machine, thereby emphasizing a desired self-adjustment feature.

In fact, when starting from the maximum extension condition of the shock absorber (Figs. 1 and 3), corresponding to minimum load conditions of the washing tub assembly, the dampening effect is developed, following an increasing load imposed by the washing tub assembly, through a progressive compression of the shock absorber (Figs. 2 and 4). Such a progressive compression starts by initially causing the piston 12 to be displaced so that friction is generated by the first ring 18 inside the sleeve 11. Thereafter (with reference to the Figs. 3 and 4 illustrating the more elaborate embodiment) the displacement of the piston rod 16 brings the annular projection 27 against the respective friction ring 25 and, by causing the latter to slide, brings about an increse in the dampening effect due to friction with the inner wall of the sleeve 11. Then, as the displacement of the piston rod 16 continues, also the annular projection 26 engages the corresponding friction ring 24. Finally, it is the shoulder 20 that engages the friction ring 23, thereby bringing about the full dampening effect.

Therefore, according to a lighter or heavier unbalance or oscillatory load being imposed by the washing tub assembly, one or more friction rings are actuated so as to generate the required progressively varying dampening effect. It has been found experimentally that the described solution enables all oscillations of the washing tub assembly to be effectively dampened, including high-frequency, low-amplitude ones that are the most annoying and troublesome vibrations generated by a clothes washing machine.

It will be appreciated that the described shock absorber may be subject to various modifications, in particular as far as the number of sliding friction elements 23-25 is concerned, without departing from the scope of the present invention as recited in the appended claims.

## Claims

1. Shock absorber, in particular for clothes washing machines, comprising a cylindrical sleeve (11) pivotally hinged on to the base of the machine and a piston (12) pivotally hinged on to the washing tub of the machine and frictionally sliding inside said sleeve (11), said piston (12) being provided with at least a first friction ring (18) attached to its outer surface in correspondence of the end portion (14) sliding inside said sleeve (11), **characterized in that** at least a second friction ring (23) is slidably mounted on the rod (16) of the piston (12) in a position situated between said first friction ring (18) and a shoulder (20) formed on the rod (16) towards the end portion of the same rod which is opposite to the one carrying the friction ring (18).

2. Shock absorber according to claim 1, **characterized in that** on the rod (16) of the piston (12) are mounted in a freely slidable manner a plurality of friction rings (23-25) and are formed a plurality of annular projections (26-28) arranged to co-operate with the intermediate friction rings (24-25).

3. Shock absorber according to claim 2, **characterized in that** the respective distances from said shoulder (20) and said annular projections (26-28) are increasing progressively.

4. Shock absorber according to any of the preceding claims, **characterized in that** the sleeve (11) is made from a cut-to-length sheet-metal blank rolled up into a cylindrical shape, with its edges fitting together along a directrix of the resulting cylinder.
